# FASCICULE DE BREVET EUROPEEN

(11) **EP 4 479 654 B1**
(45) Date de publication et mention de la délivrance du brevet: **22.07.2026**
(21) Numéro de dépôt: 23708845.5
(22) Date de dépôt: 16.02.2023
(51) Int. Cl.: F16B 5/07, F16B 11/00

(54) **SYSTEME DE RETENUE AMELIORE**
VERBESSERTES RÜCKHALTESYSTEM
IMPROVED RETENTION SYSTEM

(30) Priorité: 17.02.2022 FR 2201414
(43) Date de publication de la demande: 25.12.2024
(60) Demande divisionnaire: 26183354.5
(73) Titulaire: Aplix, 44850 Le Cellier (FR)
(72) Inventeur: ZEMNI, Lilia, 44850 Le Cellier (FR)
(74) Mandataire: Cabinet Beau de Loménie
(86) Numéro de dépôt international: PCT/FR2023/050205
(87) Numéro de publication internationale: WO 2023/156736

(56) Documents cités:
- EP-B1- 2 238 356
- US-A- 5 819 391

## Description

### Domaine Technique

La présente invention concerne un dispositif de retenue amélioré, notamment un dispositif de retenue auto-agrippant ainsi qu'un ensemble de retenue amélioré, notamment un ensemble de retenue auto-agrippant.

### Technique antérieure

Les systèmes de type auto-agrippant sont communément employés pour de nombreuses applications. Parmi les systèmes auto-agrippant, on distingue les systèmes de type boucle-crochets ou mâle-femelle, et les systèmes de type crochet-crochet, champignon-champignon ou mâle-mâle.

Les systèmes de type mâle-mâle sont conçus pour réaliser une liaison entre deux systèmes identiques, les éléments de retenue étant alors typiquement de type champignon, de manière à venir s'engager les uns dans les autres. L'assemblage de tels éléments est simplifié dans la mesure où on peut pré-positionner les éléments avant de les engager. De tels éléments procurent par ailleurs une sensation d'engagement pour l'utilisateur, ce qui permet ainsi de s'assurer que l'engagement est correctement réalisé.

En outre, de tels systèmes de fermeture confèrent des performances mécaniques élevées en termes de maintien en position, avec cependant un cycle d'ouverture-fermeture réduit par rapport à des systèmes de type boucles-crochets.

Une problématique récurrente pour la réalisation de tels éléments de retenue est de proposer des systèmes présentant des propriétés mécaniques intéressantes tout en répondant à des critères en termes d'industrialisation et de coût.

Le document US 5 819 391 A divulgue un système de type auto-grippant de type mâle-mâle selon l'art antérieur.

La présente invention vise ainsi à répondre au moins partiellement à ces problématiques.

### Exposé de l'invention

A cet effet, le présent exposé concerne un dispositif de retenue selon la revendication 1.

Selon un exemple, au moins 7% de la hauteur de chaque tige est enrobée de résine, dans certains cas au moins 10% de la hauteur de chaque tige est enrobée de résine, la hauteur étant mesurée selon une direction perpendiculaire à la face supérieure de la base.

Selon un exemple, au moins 7% de la hauteur de chaque tige, laquelle hauteur s'étendant depuis une face supérieure de la base, est enrobée de résine, dans certains cas au moins 10% de la hauteur de chaque tige est enrobée de résine, la hauteur étant mesurée selon une direction perpendiculaire à la face supérieure de la base.

Selon l'invention moins de 70% de la hauteur de chaque tige est enrobée de résine, dans d'autre cas moins de 50% de la hauteur de chaque tige est enrobée de résine, dans encore d'autres cas moins de 40% de la hauteur de chaque tige est enrobée de résine, ou encore moins 35% de la hauteur de chaque tige est enrobée de résine, dans encore un autre cas moins de 30% de la hauteur de chaque tige est enrobée de résine ou encore moins 25% de la hauteur de chaque tige est enrobée de résine, la hauteur étant mesurée selon une direction perpendiculaire à la face supérieure de la base, et depuis la face supérieure de la base. En d'autres termes, la hauteur de la tige dans la base n'est pas ici prise en considération pour déterminer la hauteur de la tige de l'élément de retenue du dispositif de retenue selon l'invention.

Selon un exemple, chaque élément de retenue a une hauteur supérieure ou égale à 0,5 mm, et l'enrobage de résine recouvre au moins 0,1 mm de la hauteur de chaque tige. Selon un exemple, chaque élément de retenue a une hauteur supérieure ou égale à 0,5 mm, et l'enrobage de résine recouvre au moins 0,1 mm de la hauteur de chaque tige. Selon un exemple, chaque élément de retenue a une hauteur supérieure ou égale à 1mm, et l'enrobage de résine recouvre au moins 0,15 mm de la hauteur de chaque tige. Selon un exemple, chaque élément de retenue a une hauteur supérieure ou égale à 1,5 mm, et l'enrobage de résine recouvre au moins 0,2 mm de la hauteur de chaque tige.

Selon un exemple, chaque élément de retenue a une hauteur inférieure ou égale 5mm, et l'enrobage de résine recouvre au moins 0,1mm de la hauteur de chaque tige.

Selon un exemple, les têtes des éléments de retenue ont des formes de portion de sphère, s'étendant depuis l'extrémité libre de la tige.

Selon un exemple, lequel la tige a une section circulaire.

Selon un exemple, la tige des éléments de retenue peut être formée de manière à définir une collerette s'étendant radialement autour de l'extrémité libre de la tige. Cette collerette permet par exemple de mettre en prise des éléments de retenue similaires. La collerette peut présenter une portion proximale agencée du côté de la base et une portion distale agencée à l'opposé de la portion proximale et définissant l'extrémité libre de l'élément de retenue. Selon un exemple, la largeur, en vue de côté de la portion proximale est supérieure à la largeur de la portion distale de la collerette. La collerette présente dans certains cas la forme générale d'un cône ou d'un volcan. Selon un exemple, dans une vue latérale du dispositif de retenue selon un plan perpendiculaire à la face supérieure de la base, le projeté de la partie visible de la collerette dans ce plan perpendiculaire à la base présente des hauteurs variables variant entre une valeur minimale comprise entre à 0% et 90% de la hauteur de la collerette mesurée comme maximale, et une valeur maximale comprise entre 95% et 100% de la hauteur de la collerette mesurée comme maximale, notamment un minima compris entre à 2% et 90% de la hauteur de la collerette mesurée comme maximale

Selon un exemple, l'enrobage en résine est réalisé avec une résine époxy ou une résine polyuréthane en particulier une résine polyuréthane aliphatique, plus particulièrement avec une résine polyuréthane aliphatique à base polyester.

Selon un exemple, la résine est agencée sur la face supérieure de la base et/ou sur la face inférieure de la base et/ou à l'intérieure de la base.

Selon un exemple, l'enrobage en résine est réalisé avec une résine aqueuse ou solvantée comprenant par exemple une colle, laquelle colle et/ou laquelle résine présentant une viscosité inférieure ou égale à 1500 mPa.s, en particulier inférieure ou égale à 1000 mPa.s, notamment inférieure ou égale à 500 mPa.s, plus particulièrement inférieure ou égale à 200 mPa.s, et/ou dans certains cas supérieure ou égale à 25 mPa.s, plus particulièrement supérieur ou égale à 50 mPa.s.

Selon un exemple, une face inférieure de la base, opposée à la face supérieure de la base, est recouverte d'un adhésif, dans certain cas l'adhésif a une force de séparation normale (selon une direction perpendiculaire à la base) supérieure à 100 kPa selon la norme ASTM D-897.

Selon un mode de réalisation, le dispositif de retenue comprend une quantité de résine majoritairement agencée dans la base.

Selon un mode de réalisation, la quantité de résine enrobant au moins une portion de chacune des tiges s'étendant depuis la base est inférieure à la quantité de résine agencée dans la base, en particulier est inférieure à la quantité de résine du reste du dispositif de retenue.

Selon un exemple, la base est formée de fils synthétiques monofilaments et/ou multifilament qui sont tissés.

Selon un exemple, lesdits fils synthétiques sont des fils thermoplastiques synthétiques qui incluent ou qui sont à base de, sans s'y limiter, les polyoléfines, par exemple le polyéthylène (PE), polyéthylène haute densité (HDPE), polypropylène (PP), polybutylène et analogue ; le polyamide (PA), par exemple des polyamides aliphatiques tels que le polyamide 6, polyamide 6.6, polyamide 10, polyamide 11, polyamide 12 et analogue ou encore des polyamides aromatiques tels que des polyarylamides (PAA) ou des polyphtalamides (PPA); des polyesters, par exemple des polyéthylènes téréphtalates (PET), des polybutylènes téréphtalates (PBT), des acides polylactiques, poly(sulfure de phénylène) (PPS), Polysulfones, Polyacétales dont les polyoxyméthylènes (POM), polycarbonates (PC), des polystyrènes et analogues, et des mélanges et des co-polymères de ces derniers.

Selon un exemple, les fils de la base sont en Polyamide et les éléments de retenue sont en polypropylène.

Selon un exemple, les éléments de retenue sont formés à partir de fil monofilament ou multifilaments, qui peuvent notamment inclure ou être à base de, sans s'y limiter, les polyoléfines, par exemple le polyéthylène (PE), polyéthylène haute densité (HDPE), polypropylène (PP), polybutylène et analogue ; le polyamide (PA), par exemple des polyamides aliphatiques tels que le polyamide 6, polyamide 6.6, polyamide 10, polyamide 11, polyamide 12 et analogue ou encore des polyamides aromatiques tels que des polyarylamides (PAA) ou des polyphtalamides (PPA) ; des polyesters, par exemple des polyéthylènes téréphtalates (PET), des polybutylènes téréphtalates (PBT), des acides polylactiques, poly(sulfure de phénylène) (PPS), Polysulfones, Polyacétales dont les polyoxyméthylènes (POM), polycarbonates (PC), des polystyrènes et analogues, et des mélanges et des co-polymères de ces derniers.

Selon un exemple, la face supérieure de la base présente une densité d'éléments de retenue supérieure ou égale à 15 éléments de retenue par cm², en particulier supérieure ou égale à 20cm², en particulier supérieure ou égale à 30 éléments de retenue par cm², notamment supérieure ou égale à 38 éléments de retenue par cm². Ainsi, la densité d'éléments de retenue est suffisamment élevée pour permettre de coopérer aisément avec d'autres éléments de retenue de type « mâle » pour réaliser une fermeture de type « mâle-mâle ».

Selon un exemple, la face supérieure de la base présente une densité d'éléments de retenue inférieure ou égale à 100 éléments de retenue par cm², ou inférieure ou égale à 80 éléments de retenue par cm² ou inférieure ou égale à 60 éléments de retenue par cm² ou inférieure ou égale à 50 éléments de retenue par cm² ou encore inférieure ou égale à 45 éléments de retenue par cm² ou encore inférieure ou égale à 40 éléments de retenue par cm². Ainsi, la densité d'éléments de retenue est suffisamment basse pour permettre de coopérer aisément avec d'autres éléments de retenue de type « mâle » pour réaliser une fermeture de type « Male-Male ».

Selon l'invention, la base est composée de fils de chaîne et de fils de trame entrelacés selon un motif répétable, et dans lequel les tiges des éléments de retenue sont entrelacées dans lesdits fils de chaîne et de trame, de sorte que chaque tige d'élément de retenue soit entrelacée dans la base de manière à venir au moins partiellement entourer un fil de chaîne ou un fil de trame de la base.

Selon un exemple, dans le sens trame, le dispositif de retenue comprend successivement des couples de tiges reliées entre elles par une portion de jonction entrelacée dans la base, lesquelles tiges et portion de jonction présentant une forme générale de V ou de W.

Selon un exemple, la base comprend un fil de trame en monofilament et un fil de chaîne qui est monofilament.

Selon un exemple, le matériau constituant les fils de la base présente une température de fusion qui est supérieure d'au moins 30°C à la température de fusion du matériau constituant l'élément de retenue, de préférence qui est supérieure d'au moins 50°C, plus préférentiellement qui est supérieure d'au moins 70°C.

Le grammage de la résine est compris entre 25 et 300 g/m², en particulier entre 50 et 200 g/m².

La masse volumique apparente de la résine est supérieure à 200 Kg/m³, en particulier supérieure à 500 Kg/m³ et/ ou inférieure à 1300 Kg/m³, en particulier inférieure à 1200 Kg/m³.

Selon un exemple, le ratio de la section des tiges des éléments de retenue sur la section d'un des fils de la base est compris entre 0,5 et 20, de préférence entre 1 et 5. Selon un exemple, le ratio de la section des tiges des éléments de retenue sur la section des deux fils de la base est compris entre 0,5 et 20, de préférence entre 1 et 5.

Selon un exemple, dans une portion de la tige s'étendant depuis la base et enrobée au moins partiellement de résine, selon une vue en MD et/ou en CD, l'ensemble formé par la résine et la tige présente une dimension selon un axe perpendiculaire à la base qui est 1, 2 fois inférieure la hauteur de la tige prise isolément (c'est-à-dire la tige non enrobée de résine), la hauteur de la tige étant mesurée selon un axe perpendiculaire à la base, notamment 1,3 fois inférieure la dimension de la tige seule, en particulier 2 fois inférieure la dimension de la tige seule, par exemple 1,5 fois inférieure la dimension de la tige seule, ou encore 3 fois inférieure la dimension de la tige seule, ou dans d'autres cas 4 fois inférieure la dimension de la tige seule.

Selon un exemple, dans une portion de la tige s'étendant depuis la base et enrobée au moins partiellement de résine, selon une vue en MD et/ou en CD, l'ensemble formé par la résine et la tige présente une dimension selon un axe perpendiculaire à l'axe de la tige qui est inférieure à 4 fois la dimension de la tige seule, notamment inférieure à 3 fois à la dimension de la tige seule, en particulier inférieure à 2 fois la dimension de la tige seule, par exemple inférieure à 1,5 fois la dimension de la tige seule, ou encore inférieure à 1,3 fois la dimension de la tige seule, ou dans d'autres cas inférieure à 1,2 fois la dimension de la tige seule.

Le dispositif de retenue comprenant de la résine enrobant au moins partiellement une portion de chacune des tiges, le dispositif, entre deux tiges adjacentes selon une vue en MD et/ou en CD, étant dépourvue de résine ou comprenant de la résine, la hauteur de résine (depuis la base) est inférieure à la hauteur de la résine (depuis la base) enrobant au moins partiellement une portion de chacune des tiges, en particulier est au moins 15% inférieure, notamment 30% inférieure.

En particulier, le rapport de la hauteur de la résine entre deux tiges adjacentes et de la hauteur de la résine enrobant au moins partiellement une portion de chacune des tiges est inférieur à 0,95, notamment inférieur à 0,85, en particulier inférieur à 0,7, dans certains cas inférieurs à 0,6, préférentiellement inférieure à 0,5, 0,4, 0,3, 0,2, 0,1 ou encore égale à 0.

La résine enrobant au moins partiellement la tige est à distance de la tête des éléments de retenues.

Les différents exemples présentés peuvent être pris individuellement ou en combinaison.

### Brève description des dessins

L'invention et ses avantages seront mieux compris à la lecture de la description détaillée faite ci-après de différents modes de réalisation de l'invention donnés à titre d'exemples non limitatifs.
[Fig. 1] La figure 1 est une vue d'ensemble d'un dispositif selon un aspect de l'invention.
[Fig. 2] La figure 2 est une autre vue d'un dispositif selon un aspect de l'invention.
[Fig. 3] La figure 3 est une vue en coupe d'un dispositif selon un aspect de l'invention.
[Fig. 4] La figure 4 est une vue illustrant une étape pour la réalisation d'un dispositif selon un aspect de l'invention.
[Fig. 5] La figure 5 est une autre vue schématisant une étape pour la réalisation d'un dispositif selon un aspect de l'invention.
[Fig. 6] La figure 6 est une vue en coupe détaillée illustrant un exemple de structure d'un dispositif selon un aspect de l'invention.
[Fig. 7] La figure 7 est une vue en coupe détaillée illustrant un autre exemple de structure d'un dispositif selon un aspect de l'invention.
[Fig. 8] La figure 8 est une vue illustrant une étape pour la réalisation d'un dispositif selon un aspect de l'invention.

Sur l'ensemble des figures, les éléments en commun sont repérés par des références numériques identiques.

### Description des modes de réalisation

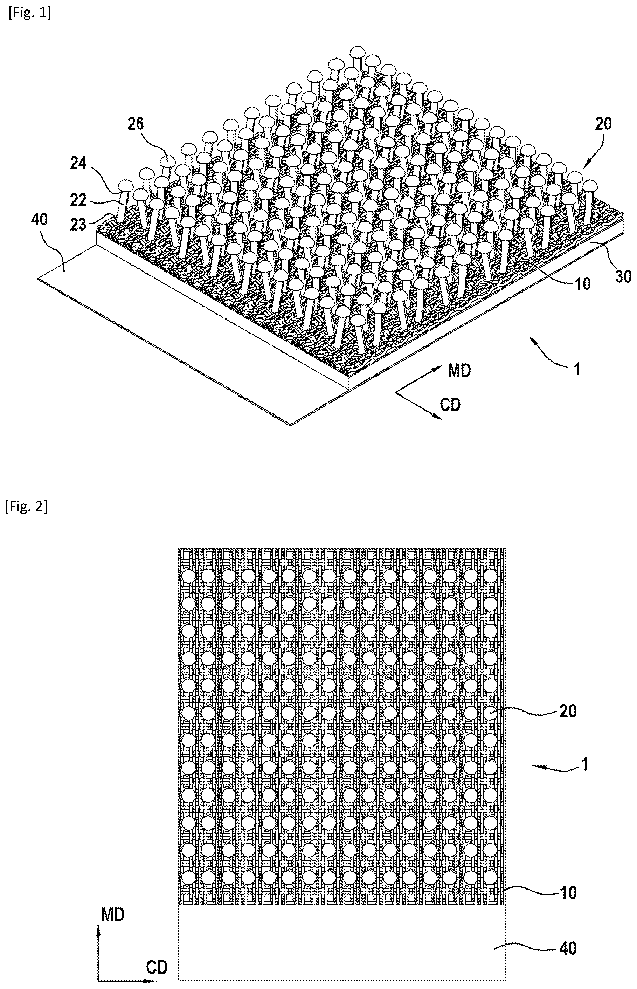

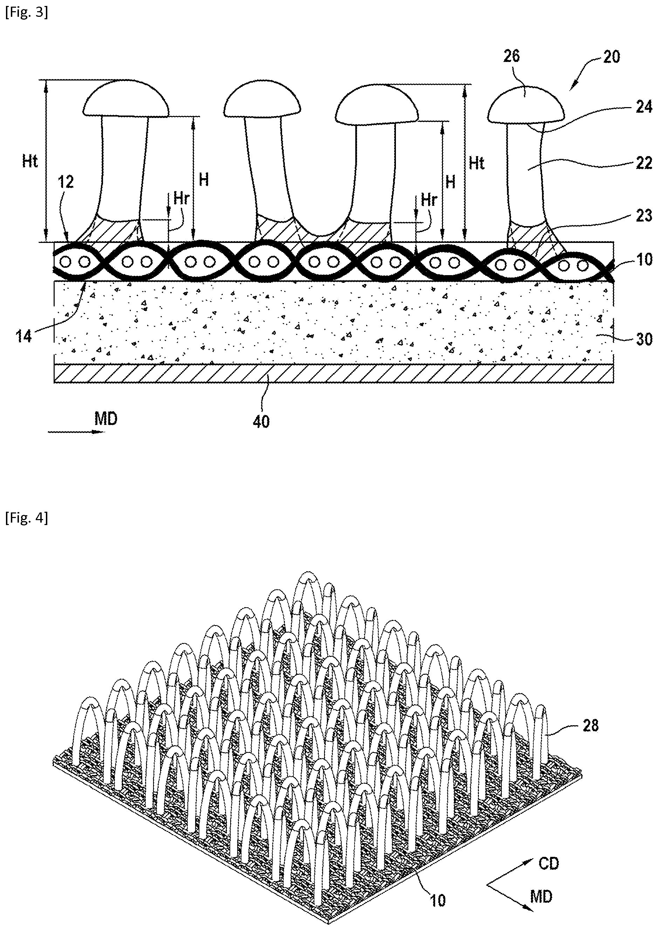

La figure 1 présente une vue en perspective d'un exemple de dispositif selon un aspect de l'invention. La figure 2 est une vue de dessus de la figure 1. La figure 3 est une vue en détail et en coupe de la figure 1.

On représente sur les figures un dispositif de retenue 1 comprenant une base 10 dont s'étendent une pluralité d'éléments de retenue 20.

La base 10 est notamment composée d'un matériau tissé. La base 10 est typiquement composée de fils de chaîne et de fils de trame entrelacés selon un motif répétable. Les fils de chaîne et les fils de trame présentent typiquement un diamètre inférieur ou égal à 0,5 mm, typiquement inférieur ou égal à 0,3 mm, ou par exemple inférieur ou égal à 0,25 mm, ou inférieur ou égal à 0,2 mm.

La base 10 est typiquement composée de fils synthétiques monofilaments et/ou multifilaments qui sont tissés, par exemple des fils en Polyamide. Les fils synthétiques peuvent par exemple être des fils thermoplastiques synthétiques qui incluent ou qui sont à base de, sans s'y limiter, les polyoléfines, par exemple le polyéthylène (PE), polyéthylène haute densité (HDPE), polypropylène (PP), polybutylène et analogue ; le polyamide (PA), par exemple des polyamides aliphatiques tels que le polyamide 6, polyamide 6.6, polyamide 10, polyamide 11, polyamide 12 et analogue ou encore des polyamides aromatiques tels que des polyarylamides (PAA) ou des polyphtalamides (PPA) ; des polyesters, par exemple des polyéthylènes téréphtalates (PET), des polybutylènes téréphtalates (PBT), des acides polylactiques, poly(sulfure de phénylène) (PPS), Polysulfones, Polyacétales dont les polyoxyméthylènes (POM), polycarbonates (PC), des polystyrènes et analogues, et des mélanges et des co-polymères de ces derniers.

Le matériau constituant les fils de la base peut par exemple présenter une température de fusion qui est supérieure d'au moins 30°C à la température de fusion du matériau constituant l'élément de retenue, ou qui est supérieure d'au moins 50°C, ou qui est par exemple supérieure d'au moins 70°C, ou par exemple supérieure d'au moins 100°C, ou encore supérieure d'au moins 110°C. Un tel écart dans les températures de fusion permet ainsi de former les têtes des éléments de retenue 20 par chauffage et déformation de la tige sans impacter le matériau formant la base 10.

On définit de manière arbitraire une face supérieure 12 de la base 10 et une face inférieure 14 de la base, ces désignations étant arbitraires et uniquement à des fins d'illustration. On considère ici à des fins d'illustration que la base 10 est positionnée à plat, et que la face supérieure 12 de la base 10 est plane ou sensiblement plane et définit un plan horizontal. De même, On considère également ici à des fins d'illustration que la face inférieure 14 de la base 10 est plane ou sensiblement plane et définit un plan horizontal.

Les éléments de retenue 20 sont formés par des crochets que l'on désigne communément par l'appellation de « champignon ». De tels éléments de retenue 20 présentent une tige 22 s'étendant depuis la face supérieure 12 de la base 10. On définit ainsi pour la tige 22 une extrémité proximale 23 au niveau de la face supérieure 12 de la base 10, et une extrémité distale 24 ou extrémité libre 24 opposée. Une tête 26 est formée sur l'extrémité libre 24 de la tige 22. La tête a une forme adaptée de sorte que deux dispositifs de retenue 1 identiques puissent s'engager l'un sur l'autre par mise en prise de leurs éléments de retenue 20 respectifs ou encore de s'adapter avec un autre dispositif de retenue équivalent, à savoir non identique, et comprenant une base et des tiges, chaque tige étant surmontée d'une tête. Ce type de fermeture est généralement appelée « fermeture mâle-mâle » ou encore « self-gripping fastener » selon la désignation anglaise.

La tige 22 des éléments de retenue est typiquement formée de manière à définir une collerette s'étendant radialement autour de l'extrémité libre 24 de la tige 22. Cette collerette permet de mettre en prise des éléments de retenue 20 similaires. La collerette présente une portion proximale agencée du côté de la base 10 et une portion distale agencée à l'opposé de la portion proximale et définissant l'extrémité libre de l'élément de retenue 20. Selon un exemple, la largeur, en vue de côté de la portion proximale est supérieure à la largeur de la portion distale de la collerette. La collerette présente dans certains cas la forme générale d'un cône ou d'un volcan. Selon un exemple, dans une vue latérale du dispositif de retenue selon un plan perpendiculaire à la face supérieure 12 de la base 10, le projeté de la partie visible de la collerette dans ce plan perpendiculaire à la base présente des hauteurs variables variant entre un minima compris entre à 0% et 90% de la hauteur de la collerette mesurée comme maximale, et un maxima compris entre 95% et 100% de la hauteur de la collerette mesurée comme maximale, notamment un minima compris entre à 2% et 90% de la hauteur de la collerette mesurée comme maximale.

La tige 22 peut par exemple présenter une section circulaire, ovale, polygonale ou plus généralement toute forme adaptée. On peut notamment réaliser une tige 22 ayant une section en forme de croix ou de « plus ». Une telle section en forme de croix présente typiquement quatre nervures réparties régulièrement autour d'un axe central de la tige 22, et s'étendant radialement autour de cet axe central de la tige 22. Plus généralement, la tige 22 peut par exemple présenter une section ovale ou carrée ou rectangle ou selon la forme générale d'une étoile avec X bras régulièrement répartis, X étant compris entre 3 et 10, chaque bras présentant une extrémité proximale et une extrémité distale, les extrémités proximales de chacun des bras étant jointives et les extrémités distales des bras sont toutes espacées les unes des autres d'un même angle.

La tête 26 des éléments de retenue 20 est typiquement réalisée par découpe et déformation de l'extrémité libre 24 de la tige 22. La forme de la tête 26 des éléments de retenue 20 dépend ainsi typiquement de la forme de la tige 22.

Ainsi, dans le cas d'une tige 22 ayant une section circulaire, la tête 22 présentera alors typiquement une forme de portion de sphère. Dans le cas d'une section de type 22 ayant une forme de croix, la tête 22 présentera alors typiquement une forme définissant quatre lobes. Plus généralement, une section 22 de forme polygonale va typiquement être associée à une tête 26 présentant une pluralité de lobes, le nombre de lobes pouvant dépendre de la forme du polygone et étant par exemple compris entre 2 et 10.

Les éléments de retenue 20 présentent typiquement une hauteur totale Ht typiquement supérieure ou égale à 0,5mm, ou à 0,7 mm, ou à 0,8 mm, ou à 1mm, ou à 1,5 mm, ou à 1,8 mm, et typiquement inférieure ou égale à 5mm, ou à 3,5 mm, ou à 3 mm, ou à 2,5 mm. La hauteur totale est mesurée selon une direction perpendiculaire à la face supérieure 12 de la base 10, depuis l'extrémité proximale 23 de la tige 22 jusqu'à l'extrémité opposée de la tête 26.

Le dispositif de retenue 1 présente typiquement une hauteur totale supérieure ou égale à 1,3 mm, ou à 1,5 mm, ou à 1,6 mm, ou à 1,8 mm, ou à 2,3 mm, ou à 2,6 mm et typiquement inférieure ou égale à 5,8 mm, ou à 4,3 mm, ou à 3,8 mm, ou à 3,3 mm. La hauteur totale du dispositif de retenue 1 est mesurée selon une direction perpendiculaire à la face supérieure 12 de la base 10, depuis la face inférieure 14 de la base 10 jusqu'à l'extrémité distale de la tête 26.

Le dispositif de retenue 1 présente typiquement une densité d'éléments de retenue 20 supérieure ou égale à 15 éléments de retenue par cm², ou supérieure ou égale à 20 éléments de retenue par cm², ou supérieure ou égale à 25 éléments de retenue par cm² ou supérieure ou égale 30 éléments de retenue par cm², et typiquement inférieure ou égale à 100 éléments de retenue par cm², ou inférieure ou égale à 80 éléments de retenue par cm² ou inférieure ou égale à 60 éléments de retenue par cm² ou inférieure ou égale à 45 éléments de retenue par cm². Avec une telle densité d'éléments de retenue, les éléments de retenue du dispositif de retenue sont suffisamment denses pour coopérer avec d'autres éléments de retenue de même catégorie d'un autre dispositif de retenue, à savoir de type « mâle », et suffisamment clairsemés (non denses) pour permettre leur extraction avec les autres éléments de retenue de même catégorie, à savoir de de type « mâle ».

Les éléments de retenue 20 sont typiquement formés par un cordon de matière, par exemple du polypropylène, qui est entrelacé dans les fils de trame et les fils de chaîne de la base 10. Les figures 4, 5, 6, 7 et 8 illustrent ainsi schématiquement la réalisation des éléments de retenue 20.

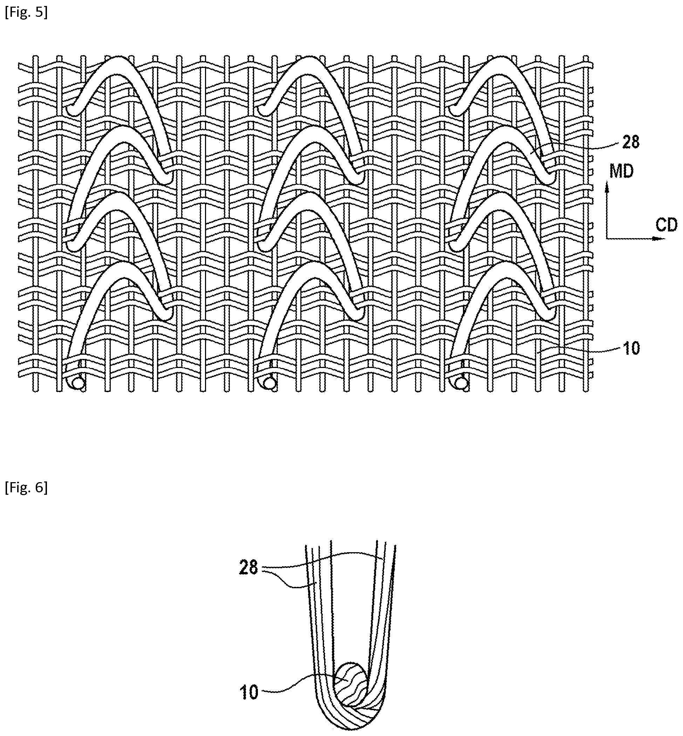

On représente sur les figures 4 et 5 une vue de la base 10 dans laquelle sont entrelacés des cordons de matière 28. Ces cordons de matière 28 sont ici représentés avec une section circulaire ; on comprend cependant que cet exemple n'est pas limitatif.

Les cordons de matière 28 sont ici entrelacés dans les fils de trame et de chaîne de la base 10 de manière à former des boucles entourant au moins partiellement les fils de trame et/ou les fils de chaîne. Les cordons 28 forment des arches qui s'étendent au-dessus de la face supérieure 12 de la base 10 entre deux boucles autour de fils de trame ou fils de chaîne, comme on le voit notamment sur les figures 4 et 5. Les fils de chaîne définissent une direction chaîne MD (ou encore direction machine), et les fils de trame définissent une direction trame CD (ou encore direction transverse, perpendiculaire à la direction machine).

Les cordons de matière 28 peuvent être entrelacés selon différents motifs dans les fils de chaîne et les fils de trame formant la base 10.

Sur l'exemple des figures 1 et 2, dans le sens trame, 2 fils de trame s'étendent entre deux éléments de retenue adjacents, et, dans le sens chaîne, une alternance de 6 fils de chaîne s'étendent entre deux éléments de retenue adjacents puis 4 fils de chaînes s'étendent entre l'un de éléments de retenue adjacents et un autre élément de retenue adjacent à ce dernier.

Selon un exemple de la figure 5, les fils de chaîne (ou communément appelés également fils de fonds) s'étendent selon la direction verticale de la figure 5 définissant la direction chaîne MD alors que les fils de trame s'étendent perpendiculairement aux fils de chaîne, selon la direction horizontale de la figure 5, définissant la direction trame CD. Selon l'exemple représenté à la figure 5, 2 de fils de trame s'étendent entre deux éléments de retenue adjacents et 4 fils de chaîne s'étendent entre deux éléments de retenue adjacents, sans qu'il n'y ait ici une alternance de nombres différents de fils de chaîne entre les éléments de retenue.

Il pourrait être utilisé un agencement de fils de chaîne et de fils de trame différents, par exemple entre 1 et 15 fils de chaînes entre deux éléments de retenue adjacents et entre 1 et 10 fils de trames entre deux éléments de retenue adjacents avec une alternance ou non du nombre de fils, c'est-à-dire en faisant varier le nombre de fils de chaînes entre deux éléments de retenue et/ou en faisant varier ou non le nombre de fils de trame entre deux éléments de retenue. Selon un autre exemple, il pourrait être utilisé un agencement de fils de chaîne et de fils de trame différents, par exemple entre 2 et 8 fils de chaîne entre deux éléments de retenue adjacents et entre 1 et 4 fils de trames entre deux éléments de retenue adjacents avec une alternance ou non du nombre de fils, c'est-à-dire en faisant varier le nombre de fils de chaîne entre deux éléments de retenue et/ou en faisant varier ou non le nombre de fils de trame entre deux éléments de retenue.

Selon un exemple, les éléments de retenue du dispositif selon l'invention sont inclinés par rapport à un axe normal (selon une direction perpendiculaire à la face supérieure ou à la face inférieure de la base 10). En particulier, l'inclinaison est comprise entre 1° et 30° entre un axe normal perpendiculaire à la face supérieure de la base 10 passant par le pied de l'élément de retenue et une droite passant par ledit pied de l'élément de retenue et tangente à l'extrémité distale de la tige, en particulier, l'inclinaison est comprise entre 2° et 15°.

Selon un exemple, les cordons de matière 28 présentent une section pouvant être contenue dans un cercle ayant un diamètre égal à 1mm, ou égal à 0,8 mm, ou égal à 0,7 mm, ou égal à 0,6 mm, ou égal à 0,5 mm.

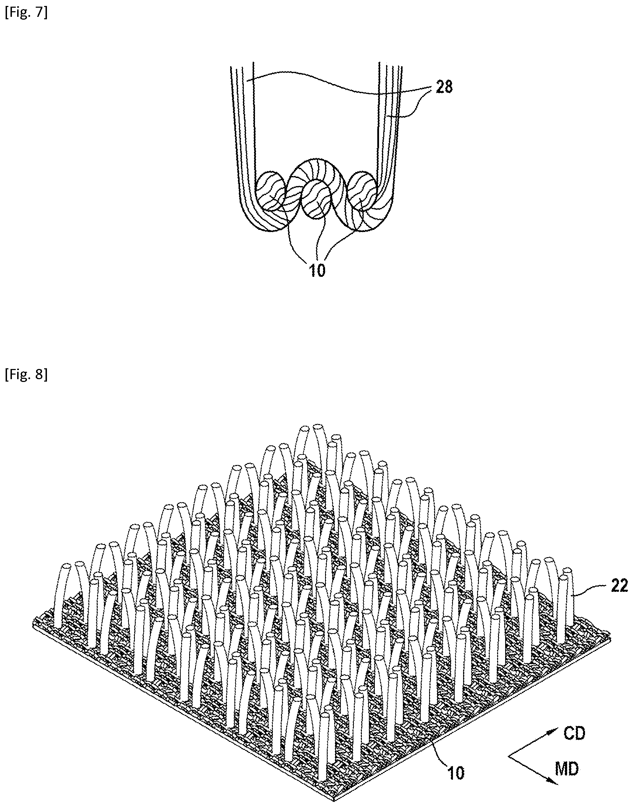

La figure 6 et la figure 7 présentent deux exemples de réalisation pour entrelacer les cordons de matière 28 dans les fils de trame et les fils de chaîne formant la base 10.

Dans l'exemple schématisé sur la figure 6, les cordons de matière 28 viennent faire une boucle autour d'un ou plusieurs fils de trame et/ou d'un ou plusieurs fils de chaîne. Chaque boucle d'un cordon de matière 28 présente donc un point de fixation avec la base 10. On qualifie cette configuration de structure en V.

Dans l'exemple schématisé sur la figure 7, les cordons de matière 28 viennent faire une boucle autour d'au moins 3 fils de trame et/ou fils de chaîne de la base 10. Chaque boucle d'un cordon de matière 28 présente donc au moins deux points de fixation avec la base 10. On qualifie cette configuration de structure en W.

Ces deux exemples de réalisation ne sont pas limitatifs, la liaison entre les cordons de matière 28 et la base 10 peut être réalisée selon tout motif adapté.

La base 10 est ensuite typiquement enduite d'une résine, par exemple par enduction et séchage ou par extrusion et refroidissement. Plus précisément, la face inférieure 14 de la base 10 est typiquement enduite d'une résine aqueuse ou solvantée comprenant notamment une colle aqueuse. La résine est typiquement appliquée sur la face inférieure 14 de la base 10, et vient ainsi combler les interstices entre les fils de chaîne et les fils de trame formant la base 10, et traverser l'épaisseur de la base 10 jusqu'à venir entourer au moins partiellement les tiges 22 des éléments de retenue 20, notamment les tiges 22 s'étendant hors de la base 10. La résine aqueuse ou solvantée employée formant, par exemple une colle, est liquide du fait de sa viscosité, qui est typiquement inférieure ou égale à 1500 mPa.s, en particulier inférieure ou égale à 1000 mPa.s, notamment inférieure ou égale à 500 mPa.s, ou inférieure ou égale à 300mPa.s, ou inférieure ou égale à 200 mPa.s, ou inférieure ou égale à 150 mPa.s, ou inférieure ou égale à 100 mPa.s, la viscosité étant mesurée à une température de 25°C avec viscosimètre LVT commercialisé sous la marque « Brookfield ». On entend par colle aqueuse, une colle ayant une teneur en eau supérieure à 50% en masse de la partie liquide de sa composition avant séchage. L'enrobage est typiquement réalisé avec une résine époxy ou une résine polyuréthane en particulier une résine polyuréthane aliphatique, plus particulièrement une résine polyuréthane aliphatique à base polyester. L'enrobage forme ainsi typiquement un film d'une épaisseur comprise entre 1% et 50%, ou entre 1% et 25%, en particulier entre 1% et 15%, ou encore entre 10% et 40%, notamment entre 20% et 40%,de la dimension maximale de la section des cordons de matière 28 formant les tiges 22, typiquement du diamètre de la section des cordons de matière 28 formant les tiges 22. Dans le cas où la base 10 est formée d'un matériau tissé, on réalise donc un enrobage des fils composant la base et un enrobage des tiges 22. Un tel enrobage est distinct d'un dépôt de matière qui viendrait former une couche épaisse sur la face supérieure 12 de la base 10 et augmenterait ainsi fortement l'épaisseur de la base 10, notamment en créant une surépaisseur continue importante entre les différents éléments de retenue.

La colle est typiquement associée à un agent réticulant et/ou un agent épaississant et/ou un agent anti-mousse formant ensemble la résine.

Plus précisément, la résine vient recouvrir une portion de tige des éléments de retenue 20 s'étendant depuis l'extrémité proximale 23 de la tige 22.

Selon la forme de la tige 22, la tige 22 peut être au moins partiellement recouverte de résine sur une partie de la hauteur H de la tige 22, la hauteur de la tige 22 étant mesurée depuis son extrémité proximale 23, c'est-à-dire depuis la face supérieure 12 de la base 10 qui est ici considérée plane, et selon une direction perpendiculaire à la face supérieure 12 de la base 10. Selon un exemple, la résine s'étend sur au moins 5% de la hauteur de la tige 22, ou sur au moins 10% de la hauteur de la tige 22, ou plus précisément sur au moins 15% de la hauteur de la tige 22, ou encore sur au moins 20% ou 25% de la hauteur de la tige 22. Selon un exemple non-revendiqué, la résine s'étend sur au plus 95% de la hauteur de la tige 22, ou sur au plus 90% de la hauteur de la tige 22, ou plus précisément sur au plus 85% de la hauteur de la tige 22, ou encore sur au plus 80% ou 75% de la hauteur de la tige 22. On désigne par Hr la hauteur de la tige 22 recouverte au moins partiellement de résine. Selon un exemple, chaque élément de retenue 20 a une hauteur supérieure ou égale à 0,5 mm, et l'enrobage de résine recouvre au moins 0,1 mm de la hauteur de chaque tige. Selon un exemple, chaque élément de retenue 20 a une hauteur supérieure ou égale à 0,5mm, et l'enrobage de résine recouvre au moins 0,1mm de la hauteur de chaque tige. Selon un exemple, chaque élément de retenue 20 a une hauteur supérieure ou égale à 1mm, et l'enrobage de résine recouvre au moins 0,15mm de la hauteur de chaque tige. Selon un exemple, chaque élément de retenue 20 a une hauteur supérieure ou égale à 1,5mm, et l'enrobage de résine recouvre au moins 0,2mm de la hauteur de chaque tige. Selon un exemple, chaque élément de retenue a une hauteur inférieure ou égale 5mm, et l'enrobage de résine recouvre au moins 0,1mm de la hauteur de chaque tige.

La résine peut s'étendre sur tout ou partie de la périphérie externe de la tige 22 sur la hauteur considérée. En considérant une portion de la tige 22 comprise entre l'extrémité proximale 23 et la hauteur Hr, tout ou partie de la périphérie externe de cette portion de la tige 22 est alors recouvert de résine. Selon un exemple, au moins 30% de la périphérie externe de cette portion de la tige 22 est recouvert de résine, ou plus précisément au moins 35%, 40%, 50%, 60%, 70%, 80% ou 90% de la périphérie externe de cette portion de la tige 22 est recouvert de résine.

La surface enveloppée par la résine va notamment dépendre de la forme de la tige 22. On comprend en effet que les irrégularités et les arrêtes sur la périphérie externe de la tige 22 vont favoriser une répartition non uniforme de la résine.

La base de chacune des tiges 22 des éléments de retenue 20 est ainsi au moins partiellement enveloppée ou enrobée de résine. Cet enrobage au moins partiel de la base des tiges 22 par de la résine vient ainsi rigidifier les éléments de retenue et améliorer la cohésion de l'ensemble. Ainsi, lorsque les éléments de retenue 20 sont engagés avec des éléments de retenue similaires ou identiques, ce qui améliore la tenue mécanique des éléments de retenue, améliore la stabilité du produit, et également le nombre de cycles d'engagement et désengagement pouvant être réalisés.

Les cordons de matière 28 sont ensuite coupés de manière à séparer chaque arche en deux tiges, qui forment ainsi les tiges 22 des éléments de retenue 20. Cette opération est typiquement réalisée au moyen d'un outil de découpe calibré pour venir couper les arches formées par les cordons de matière 28 à une hauteur prédéterminée par rapport à la base 10. On la qualifie communément d'opération de rasage.

Les extrémités libres des tiges 22 sont ensuite soumise à une opération de formage pour la réalisation de la tête 26 des éléments de retenue 20. Cette opération de mise en forme comprend par exemple un chauffage et une déformation des extrémités libres des tiges 22 pour obtenir la forme souhaitée pour les têtes 26 des éléments de retenue 20. Comme indiqué précédemment, la forme de la tête des éléments de retenue dépend typiquement de la forme de la tige 22. Dans le cas de têtes 26 ayant une forme de portion de sphère, on peut par exemple désigner cette étape comme une opération de boulage.

La base 10 est typiquement couplée à un adhésif solidarisé à la face inférieure 14 de la base 10. L'adhésif comprend typiquement une couche de mousse 30 solidarisée à la face inférieure 14 de la base 10, et un ruban adhésif 40 solidarisé à la couche de mousse 30, de sorte que la couche de mousse 30 soit positionnée entre la face inférieure 14 de la base 10 et le ruban adhésif 40. L'adhésif présente par exemple une force de séparation normale (selon une direction perpendiculaire à la base 10) supérieure à 100 kPa selon la norme ASTM D-897.

La couche de mousse 30 est typiquement composée d'une mousse acrylique avec une épaisseur minimale pouvant être égale à 0,10 mm, 0,20mm ou 0,30 mm, et une épaisseur maximale pouvant être égale à 3 mm, 2mm, 1mm ou 0,5 mm. Le ruban adhésif 40 est typiquement un adhésif sensible à la pression.

Le ruban adhésif 40 et la couche de mousse 30 sont typiquement solidaires l'un de l'autre, cet ensemble étant ensuite solidarisé à la face inférieure 14 de la base 10 par exemple au moyen d'un enduit acrylique.

Le dispositif de retenue 1 tel que proposé peut être combiné avec un dispositif de retenue similaire ou identique.

Le présent exposé concerne ainsi un ensemble comprenant un premier dispositif de retenue selon l'un quelconque des modes de réalisation décrits précédemment, et un second dispositif de retenue comprenant une base, une pluralité d'éléments de retenue comprenant chacun une tige et une tête, la tige s'étendant depuis une face supérieure de la base, et la tête étant formée à une extrémité libre de la tige opposée à la face supérieure de la base. En variante, le second dispositif de retenue peut également être un dispositif de retenue selon l'un quelconque des modes de réalisation décrits précédemment, identique ou distinct du premier dispositif de retenue.

Le premier et le second dispositif de retenue peuvent alors être associés par engagement de leurs éléments de retenue respectifs. Ce type de fermeture est généralement appelée « fermeture mâle-mâle » ou encore « self-gripping fastener » selon l'appellation usuelle en langue anglaise. Le premier et le second dispositif de retenue sont typiquement positionnés face à face, leurs éléments de retenue se faisant ainsi face. On exerce ensuite une pression de manière à rapprocher les dispositifs de retenue, typiquement selon une direction perpendiculaire à la base des dispositifs de retenue, de sorte que les têtes du premier et du second dispositif de retenue s'engagent. Plus précisément, en considérant à titre d'exemple que le premier dispositif de retenue est maintenu fixe et que le second dispositif de retenue est pressé sur le premier dispositif de retenue, les têtes des éléments de retenue du second dispositif de retenue vont venir au-delà d'un plan défini par les têtes des éléments de retenue du premier dispositif de retenue, et ainsi passer au-delà des têtes des éléments de retenue du premier dispositif de retenue. Ainsi, les têtes des dispositifs de retenue vont s'engager par l'intermédiaire de portions faisant saillie depuis les tiges, et s'opposer à une séparation des dispositifs de retenue.

La force de séparation normale (selon une direction perpendiculaire à la base 10) des deux dispositifs de retenue est par exemple au moins supérieure à 10 N/cm² et/ou a une force d'engagement normale (selon une direction perpendiculaire à la base 10) des deux dispositifs supérieure à 5 N/cm².

Le produit tel que proposé peut ainsi être fixé sur des surfaces d'objets ou éléments à l'aide du ruban adhésif 40, ces objets ou éléments pouvant ensuite être assemblés au moyen des éléments de retenue 20 de manière fiable et réversible.

Les différentes caractéristiques dimensionnelles indiquées dans le présent texte sont des moyennes issues de trois mesures individuelles.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Dispositif de retenue comprenant :
- une base (10), comprenant un matériau tissé,
- une pluralité d'éléments de retenue (20), lesdits éléments de retenue (20) comprenant chacun une tige (22) et une tête (26),
la tige (22) s'étendant depuis une face supérieure (12) de la base (10), et la tête (26) étant formée à une extrémité libre (24) de la tige (22) opposée à la face supérieure (12) de la base (10),
les tiges (22) des éléments de retenue (20) s'étendant au moins en partie dans le matériau tissé de la base (10),
une portion de chacune des tiges (22) s'étendant depuis la base (10) étant au moins partiellement enrobée de résine,
dans lequel la base (10) est composée de fils de chaîne et de fils de trame entrelacés selon un motif répétable, et dans lequel les tiges (22) des éléments de retenue (20) sont entrelacées dans lesdits fils de chaîne et de trame, de sorte que chaque tige (22) d'élément de retenue (20) soit entrelacée dans la base (10) de manière à venir au moins partiellement entourer un fil de chaîne et/ou un fil de trame de la base (10),
caractérisé an ce que moins de 70% de la hauteur de chaque tige est enrobée de résine.

2. Dispositif de retenue selon la revendication 1, dans lequel au moins 7% de la hauteur de chaque tige (10) est enrobée de résine, en particulier 10 % de la hauteur de chaque tige (10), la hauteur étant mesurée selon une direction perpendiculaire à la face supérieure (12) de la base (10).

3. Dispositif de retenue selon la revendication 2, dans lequel chaque élément de retenue (20) a une hauteur supérieure ou égale à 0,5 mm, et l'enrobage de résine recouvre au moins 0,1 mm de la hauteur de chaque tige (20).

4. Dispositif de retenue selon l'une des revendications précédentes, dans lequel les têtes (26) des éléments de retenue (20) ont des formes de portion de sphère, s'étendant depuis l'extrémité libre (24) de la tige (20), notamment une portion de demi sphère, ou ont des formes multilobées, notamment avec un nombre de lobes compris entre 2 et 10.

5. Dispositif selon l'une des revendications précédentes, dans lequel la tige (22) a une section circulaire ou ovale ou carrée ou rectangle ou selon la forme générale d'une étoile avec X bras régulièrement répartis, X étant compris entre 3 et 10, chaque bras présentant une extrémité proximale et une extrémité distale, les extrémités proximales de chacun des bras étant jointives et les extrémités distales des bras sont toutes espacées les unes des autres d'un même angle.

6. Dispositif selon l'une des revendications précédentes, dans lequel l'enrobage en résine est réalisé avec une résine époxy ou une résine polyuréthane en particulier une résine polyuréthane aliphatique, plus particulièrement une résine polyuréthane aliphatique à base polyester.

7. Dispositif selon l'une des revendications précédentes, dans lequel l'enrobage en résine est réalisé avec une résine présentant une viscosité inférieure ou égale à 1500 mPa.s.

8. Dispositif de retenue selon l'une des revendications précédentes, dans lequel une face inférieure (14) de la base (10), opposée à la face supérieure (12) de la base (10), est recouverte d'un adhésif.

9. Dispositif de retenue selon l'une des revendications précédentes, dans lequel la base (10) est formée de fils synthétiques monofilaments et/ou multifilaments tissés.

10. Dispositif selon la revendication 9, dans lequel lesdits fils synthétiques sont en matière thermoplastique.

11. Dispositif selon l'une des revendications précédentes, dans lequel la face supérieure (12) de la base (10) présente une densité d'éléments de retenue (20) supérieure ou égale à 15 éléments de retenue par cm².

12. Ensemble de retenue qui comprend un premier dispositif de retenue selon l'une des revendications précédentes et un deuxième dispositif de retenue comprenant :
- une base,
- une pluralité d'éléments de retenue, lesdits éléments de retenue comprenant chacun une tige et une tête, la tige s'étendant depuis une face supérieure de la base, et la tête étant formée à une extrémité libre de la tige opposée à la face supérieure de la base.

13. Ensemble de retenue selon la revendication précédente, dans lequel le deuxième élément de retenue est un élément de retenue selon l'une des revendications 1 à 11.

14. Ensemble de retenue selon l'une des revendications 12 et 13, dans lequel la force de séparation des deux dispositifs est au moins supérieure à 10 N/cm² et/ou a une force d'engagement des deux dispositifs supérieure à 5 N/cm².

## Patentansprüche

1. Rückhaltevorrichtung, umfassend:
- eine Basis (10), die ein gewebtes Material umfasst,
- eine Vielzahl von Rückhalteelementen (20), wobei die Rückhalteelemente (20) jeweils einen Schaft (22) und einen Kopf (26) umfassen,
wobei sich der Schaft (22) von einer oberen Fläche (12) der Basis (10) erstreckt und der Kopf (26) an einem freien Ende (24) des Schafts (22) ausgebildet ist, das der oberen Fläche (12) der Basis (10) gegenüberliegt,
wobei sich die Schäfte (22) der Rückhalteelemente (20) zumindest teilweise in dem gewebten Material der Basis (10) erstrecken,
wobei ein sich von der Basis (10) erstreckender Abschnitt jedes Schafts (22) zumindest teilweise mit Harz umhüllt ist,
wobei die Basis (10) aus Kettfäden und Schussfäden besteht, die in einem wiederholbaren Muster miteinander verflochten sind, und wobei die Schäfte (22) der Rückhalteelemente (20) in die Kettfäden und Schussfäden verflochten sind, so dass jeder Schaft (22) eines Rückhalteelements (20) in die Basis (10) derart verflochten ist, dass er zumindest teilweise einen Kettfaden und/oder einen Schussfaden der Basis (10) umgibt,
**dadurch gekennzeichnet, dass** weniger als 70 % der Höhe jedes Schafts mit Harz umhüllt ist.

2. Rückhaltevorrichtung nach Anspruch 1, wobei mindestens 7 % der Höhe jedes Schafts (10) mit Harz umhüllt sind, insbesondere 10 % der Höhe jedes Schafts (10), wobei die Höhe gemäß einer Richtung senkrecht zu der oberen Fläche (12) der Basis (10) gemessen wird.

3. Rückhaltevorrichtung nach Anspruch 2, wobei jedes Rückhalteelement (20) eine Höhe von größer oder gleich 0,5 mm aufweist und die Harzumhüllung mindestens 0,1 mm der Höhe jedes Schafts (10) bedeckt.

4. Rückhaltevorrichtung nach einem der vorhergehenden Ansprüche, wobei die Köpfe (26) der Rückhalteelemente (20) die Form eines Kugelabschnitts aufweisen, der sich von dem freien Ende (24) des Schafts (10) erstreckt, insbesondere eines Halbkugelabschnitts, oder multilobale Formen aufweisen, insbesondere mit einer Anzahl von Lappen zwischen 2 und 10.

5. Vorrichtung nach einem der vorhergehenden Ansprüche, wobei der Schaft (22) einen kreisförmigen oder ovalen oder quadratischen oder rechteckigen Querschnitt oder die allgemeine Form eines Sterns mit X gleichmäßig verteilten Armen aufweist, wobei X zwischen 3 und 10 liegt, wobei jeder Arm ein proximales Ende und ein distales Ende aufweist, wobei die proximalen Enden von jedem der Arme miteinander verbunden sind und die distalen Enden der Arme alle um denselben Winkel voneinander beabstandet sind.

6. Vorrichtung nach einem der vorhergehenden Ansprüche, wobei die Harzumhüllung mit einem Epoxidharz oder einem Polyurethanharz, insbesondere einem aliphatischen Polyurethanharz, insbesondere einem aliphatischen Polyurethanharz auf Polyesterbasis, ausgeführt ist.

7. Vorrichtung nach einem der vorhergehenden Ansprüche, wobei die Harzumhüllung mit einem Harz ausgeführt ist, das eine Viskosität von kleiner oder gleich 1500 mPa.s aufweist.

8. Rückhaltevorrichtung nach einem der vorhergehenden Ansprüche, wobei eine untere Fläche (14) der Basis (10), die der oberen Fläche (12) der Basis (10) gegenüberliegt, mit einem Klebstoff bedeckt ist.

9. Rückhaltevorrichtung nach einem der vorhergehenden Ansprüche, wobei die Basis (10) aus gewebten synthetischen Monofilament- und/oder Multifilamentfäden gebildet ist.

10. Vorrichtung nach Anspruch 9, wobei die synthetischen Fäden aus thermoplastischem Material bestehen.

11. Vorrichtung nach einem der vorhergehenden Ansprüche, wobei die obere Fläche (12) der Basis (10) eine Dichte von Rückhalteelementen (20) von größer oder gleich 15 Rückhalteelementen pro cm² aufweist.

12. Rückhalteanordnung, umfassend eine erste Rückhaltevorrichtung nach einem der vorhergehenden Ansprüche und eine zweite Rückhaltevorrichtung, umfassend:
- eine Basis,
- eine Vielzahl von Rückhalteelementen, wobei die Rückhalteelemente jeweils einen Schaft und einen Kopf umfassen, wobei sich der Schaft von einer oberen Fläche der Basis erstreckt und der Kopf an einem freien Ende des Schafts ausgebildet ist, das der oberen Fläche der Basis gegenüberliegt.

13. Rückhalteanordnung nach vorhergehendem Anspruch, wobei das zweite Rückhalteelement ein Rückhalteelement nach einem der Ansprüche 1 bis 11 ist.

14. Rückhalteanordnung nach einem der Ansprüche 12 und 13, wobei die Trennkraft der beiden Vorrichtungen mindestens größer als 10 N/cm² ist und/oder die Eingriffskraft der beiden Vorrichtungen größer als 5 N/cm² ist.

## Claims

1. A retaining device comprising:
- a base (10), comprising a woven material,
- a plurality of retaining elements (20), said retaining elements (20) each comprising a stem (22) and a head (26),
the stem (22) extending from an upper face (12) of the base (10), and the head (26) being formed at a free end (24) of the stem (22) opposite the upper face (12) of the base (10),
the stems (22) of the retaining elements (20) extending at least partly in the woven material of the base (10),
a portion of each of the stems (22) extending from the base (10) being at least partially coated with resin,
wherein the base (10) is composed of warp threads and weft threads intertwined in a repeatable pattern, and in which the stems (22) of the retaining elements (20) are intertwined in said warp and weft threads, so that each retaining element (20) stem (22) is intertwined in the base (10) so as to at least partially surround a warp thread and/or a weft thread of the base (10), **characterized in that** less than 70% of the height of each stem is coated with resin.

2. The retaining device according to claim 1, wherein at least 7% of the height of each stem (10) is coated with resin, in particular 10% of the height of each stem (10), the height being measured in a direction perpendicular to the upper face (12) of the base (10).

3. The retaining according to claim 2, wherein each retainer (20) has a height greater than or equal to 0.5 mm, and the resin coating covers at least 0.1 mm of the height of each stem (20).

4. The retaining device according to one of the preceding claims, wherein the heads (26) of the retaining elements (20) have the shape of a portion of a sphere, extending from the free end (24) of the stem (20), in particular a half-sphere portion, or have multilobed shapes, in particular with a number of lobes comprised between 2 and 10.

5. The device according to one of the preceding claims, wherein the stem (22) has a circular or oval or square or rectangular section or in the general shape of a star with X regularly distributed arms, X being comprised between 3 and 10, each arm having a proximal end and a distal end, the proximal ends of each of the arms being contiguous and the distal ends of the arms are all spaced from each other at the same angle.

6. The device according to one of the preceding claims, wherein the resin coating is produced with an epoxy resin or a polyurethane resin, in particular an aliphatic polyurethane resin, more particularly with a polyester-based aliphatic polyurethane resin.

7. The device according to one of the preceding claims, wherein the resin coating is produced with a resin having a viscosity less than or equal to 1500 mPa.s.

8. The retaining device according to one of the preceding claims, wherein a lower face (14) of the base (10), opposite the upper face (12) of the base (10), is covered with an adhesive.

9. The retaining device according to one of the preceding claims, wherein the base (10) is formed of woven monofilament and/or multifilament synthetic wires.

10. The device according to claim 9, wherein said synthetic wires are made of thermoplastic material.

11. The device according to one of the preceding claims, wherein the upper face (12) of the base (10) has a density of retaining elements (20) greater than or equal to 15 retaining elements per cm².

12. A retaining assembly which comprises a first retaining device according to one of the preceding claims and a second retaining device comprising:
- a base,
- a plurality of retaining elements, said retaining elements each comprising a stem and a head, the stem extending from an upper face of the base, and the head being formed at a free end of the stem opposite the upper face of the base.

13. The retaining assembly according to the preceding claim, wherein the second retaining element is a retaining element according to one of claims 1 to 11.

14. The retaining assembly according to one of claims 12 and 13, wherein the separation force of the two devices is at least greater than 10 N/cm² and/or has an engagement force of the two devices greater than 5 N/cm².
